# EUROPÄISCHE PATENTSCHRIFT

(11) **EP 2 795 821 B1**
(45) Veröffentlichungstag und Bekanntmachung des Hinweises auf die Patenterteilung: **16.03.2016**
(21) Anmeldenummer: 12810266.2
(22) Anmeldetag: 20.12.2012
(51) Int. Cl.: H04L 1/20

(54) **TEILNEHMERSTATION EINES BUSSYSTEMS UND VERFAHREN ZUR ÜBERTRAGUNG VON DATEN ZWISCHEN TEILNEHMERSTATIONEN EINES BUSSYSTEMS**
SUBSCRIBER STATION OF A BUS SYSTEM AND METHOD FOR TRANSFERRING DATA BETWEEN SUBSCRIBER STATIONS OF A BUS SYSTEM
POSTE DU RÉSEAU D'UN BUS SYSTÈME ET PROCÉDÉ DE TRANSMISSION DE DONNÉES ENTRE LES POSTES DU RÉSEAU D'UN BUS SYSTÈME

(30) Priorität: 22.12.2011 DE 102011089586
(43) Veröffentlichungstag der Anmeldung: 29.10.2014
(73) Patentinhaber: Robert Bosch GmbH, 70442 Stuttgart (DE)
(72) Erfinder: HARTWICH, Florian, 72762 Reutlingen (DE); HORST, Christian, 72144 Dusslingen (DE)
(86) Internationale Anmeldenummer: PCT/EP2012/076348
(87) Internationale Veröffentlichungsnummer: WO 2013/092837

(56) Entgegenhaltungen:
- CA-C- 1 305 524
- GAUJAL B ET AL: "Fault Confinement Mechanisms on CAN: Analysis and Improvements", IEEE TRANSACTIONS ON VEHICULAR TECHNOLOGY, IEEE SERVICE CENTER, PISCATAWAY, NJ, US, Bd. 54, Nr. 3, 1. Mai 2005 (2005-05-01), Seiten 1103-1113, XP011132663, ISSN: 0018-9545, DOI: 10.1109/TVT.2005.844652
- I. Bernsdorf, T. Vogt, L. Stojanovic, S. Szabadi: "CAN-BUS / Ausarbeitung zum CAN-Bus WS 09/10", Beuth Hochschule für Technik Berlin / Fachbereich VII / Elektrotechnik und Feinwerktechnik/ Studiengang: Automatisierungstechnik und Elektronik, Prof. Dr. Ing. Detlef Heinemann , 6. November 2009 (2009-11-06), Seiten 1-42, XP002692949, Berlin Gefunden im Internet: URL:http://prof.beuth-hochschule.de/upload s/media/AusarbeitungCAN-Bus.pdf [gefunden am 2013-02-25]
- "CAN - Controller Area Network", Uni Magdeburg , 30. März 2000 (2000-03-30), Seiten 1-26, XP002692950, Gefunden im Internet: URL:http://www-ivs.cs.uni-magdeburg.de/bs/ lehre/wise9900/proro/vortrag/can/CAN.pdf [gefunden am 2013-02-25]
- "Introduction to CAN", RENESAS ELECTRONICS CORPORATION (NEC ELECTRONICS CORPORATION) , 7. April 2006 (2006-04-07), Seiten 1-44, XP002692951, Gefunden im Internet: URL:http://documentation.renesas.com/doc/p roducts/mpumcu/apn/rej05b0804_m16cap.pdf [gefunden am 2013-02-25]
- Robert BOYS: "CAN Primer: Creating your own Network ( Version 1.01 )", KEIL (TM) - An ARM Company , 19. Juni 2009 (2009-06-19), Seiten 1-14, XP002692952, San Jose, California Gefunden im Internet: URL:http://ics.nxp.com/support/documents/m icrocontrollers/pdf/lpc23xx.can.arm.pdf [gefunden am 2013-02-25]
- A. ALBERT, W. GERTH: "Evaluation and Comparison of the Real-Time Performance of CAN and TTCAN", 9th international CAN Conference, iCC 2003, Munich , 14. Oktober 2003 (2003-10-14), Seiten 1-8, XP002692953, Munich, Germany Gefunden im Internet: URL:http://www.bosch-semiconductors.de/med ia/pdf_1/canliteratur/9th_icc_ag_2003.pdf [gefunden am 2013-02-24]
- Prof. Dr.-Ing. Konrad Etschberger: "Comparing CAN- and Ethernet-based Communication", IXXAT Automation GmbH, 88250 Weingarten , 14. Januar 2005 (2005-01-14), Seiten 1-3, XP002692954, Weingarten, Germany Gefunden im Internet: URL:http://www.ixxat.de/download/artikel_c omparison_can_and_ethernet.pdf [gefunden am 2013-02-25]
- "PCAN-Diag 2, Handbuch zur CAN-Bus-Diagnose, Benutzerhandbuch v2.3.1", PEAK-System Technik GmbH , 5. März 2012 (2012-03-05), Seiten 1-107, XP002692955, Darmstadt, Germany Gefunden im Internet: URL:http://www.peak-system.com/produktcd/P df/Deutsch/PCAN-Diag2_UserMan_deu.pdf [gefunden am 2013-02-26]
- Nicolas NAVET, Hervé PERRAULT: "CAN in Automotive Applications: a Look Forward", 13th international CAN Conference, iCC 2012, Hambach Castle , 5. März 2012 (2012-03-05), Seiten 1-6, XP002692956, HAMBACH, Germany Gefunden im Internet: URL:http://nicolas.navet.eu/publi/CAN_conf _2012_NN_HP.pdf [gefunden am 2013-02-26]

## Beschreibung

### Technisches Gebiet

Die vorliegende Erfindung betrifft eine Teilnehmerstation eines Bussystems und ein Verfahren zur Übertragung von Daten zwischen Teilnehmerstationen eines Bussystems, bei welchen insbesondere die Buslast des Bussystems auf einfache Weise verfolgt werden kann.

### Stand der Technik

Derzeit ist ein Bussystem bekannt, bei welchem Nachrichten mittels des CAN-Protokolls übertragen werden, wie es in der CAN-Spezifikation in der ISO11898 beschrieben ist.

DE 100 00 305 A1 beschreibt das CAN (Controller Area Network = Steuereinrichtungsnetzwerk) sowie eine als TTCAN (Time Triggered CAN = Zeit getriggertes CAN) bezeichnete Erweiterung des CAN.

CAN und TTCAN arbeiten mit einem nachrichtenbasierten Protokoll und kommen beispielsweise in Fahrzeugen zum Einsatz. Ein auf CAN oder TTCAN basierendes Bussystem ermöglicht allen mit ihm verbundenen Teilnehmerstationen, wie beispielsweise Mikrocontrollern, miteinander zu kommunizieren.

Das CAN-Protokoll stellt für die Fehlerbehandlung einen Sendefehlerzähler (Transmit Error Counter) und einen Empfangsfehlerzähler (Receive Error Counter) zur Verfügung. Fehlerbedingungen inkrementieren die Fehlerzähler, erfolgreiches Senden oder Empfangen dekrementieren die Zähler. Die Zählerstände des Sendefehlerzählers und des Empfangsfehlerzählers beeinflussen den Fehlerstatus des CAN-Controllers, der auch CAN-Steuereinrichtung genannt werden kann. Der CAN-Controller geht beispielsweise bei einem Zählerstand des Sendefehlerzählers von 128 oder mehr in den Zustand "error passive", anders ausgedrückt "Fehler passiv", über. Bei einem Zählerstand des Sendefehlerzählers von 256 oder mehr geht der CAN-Controller in den Zustand "BusOff" anders ausgedrückt "Bus aus" über. Zusätzlich zum Sendefehlerzähler und Empfangsfehlerzähler kann ein CAN-Controller noch über einen Fehlerprotokollierungszähler (Error Logging Counter) verfügen. Dieser Zähler wird inkrementiert, wenn ein CAN-Protokollfehler den Sendefehlerzähler oder den Empfangsfehlerzähler inkrementiert. Ein Lesen des Fehlerprotokollierungszählers setzt den Fehlerprotokollierungszähler zurück. Der Zählerstand des Zählerprotokollierungszählers zeigt die Summe der seit dem letzten Lesen aufgetretenen CAN-Protokollfehler an.

Bei den üblichen CAN-Controllern wird der erfolgreiche Versand einer Nachricht durch Setzen beispielsweise eines TxOK Statusbits signalisiert. Der erfolgreiche Empfang einer Nachricht wird hingegen durch Setzen beispielsweise eines RxOK Statusbits signalisiert. Hiermit ist es jedoch keine direkte Aussage über die aktuelle Buslast möglich.

Die Veröffentlichung,, Fault Confinement Mechanisms on CAN: Analysis and Improvements" von B. Gaujal et al. (IEEE Transactions on Vehicular Technology, Vol. 54, Nr. 3, S. 1103) offenbart eine Teilnehmerstation eines seriellen Bussystems mit einem ersten Zähler TEC, der im Wertebereich von 0 bis 255 bei jeder fehlerfrei versandten Nachricht dekrementiert und bei jeder fehlerhaft versandten Nachricht inkrementiert wird, und einem weiteren Zähler REC der im Wertebereich von 0 bis 255 bei jeder fehlerfrei empfangenen Nachricht dekrementiert und bei jeder fehlerhaft empfangenen Nachricht inkrementiert wird. Bevor der Zähler TEC den Wert 255 erreicht, kann er auf den Werft. 0 zurückgesetzt werden.

Das kanadische Patent CA 1 305 524 C beschreibt einen "Radio Repeater" mit einer priorisierten Datenübertragung und einer Übertragungswiederholung bei fehlerhafter Übertragung, wobei ein Fehlerzähler inkrementiert wird.

### Offenbarung der Erfindung

Daher ist es Aufgabe der vorliegenden Erfindung, eine Teilnehmerstation eines Bussystems und ein Verfahren zur Übertragung von Daten zwischen Teilnehmerstationen eines Bussystems bereitzustellen, welche auf einfache Weise ermöglichen, die CAN-Buslast auf dem Bus zu verfolgen.

Die Aufgabe wird durch eine Teilnehmerstation eines Bussystems mit den Merkmalen des Anspruchs 1 gelöst. Die Teilnehmerstation umfasst einen Zähler zum Zählen jeder fehlerfrei versandten Nachricht, wobei der Zähler inkrementiert wird, wenn eine Nachricht fehlerfrei versandt wird, und eine Zurücksetzeinrichtung zum Zurücksetzen des Zählerstands des Zählers, wenn der Zählerstand des Zählers gelesen wird.

Weiterhin hat die Teilnehmerstation zudem einen weiteren Zähler zum Zählen jeder fehlerfrei empfangenen Nachricht, wobei der Zähler nur zum Zählen jeder fehlerfrei versandten Nachricht ausgestaltet ist, und wobei die Zurücksetzeiririchtung zum Zurücksetzen des Zählers und/oder des weiteren Zählers ausgestaltet ist, wenn der Zählerstand des jeweiligen Zählers gelesen wird. Aufgrund des Vorhandenseins von zwei Zählern kann die Buslast noch genauer ermittelt werden. Zudem sind genauere Aussagen über den Zustand der Teilnehmerstation, genauer gesagt ihres CAN-Controllers, möglich.

Zusätzlich weist die Teilnehmerstation zudem eine Zählerstandleseeinrichtung zum Auslesen des Zählerstands des Zählers oder des weiteren Zählers auf, wobei die Zählerstandleseeinrichtung zum Zurücksetzen eines Zählerstands des Zählers oder des weiteren Zählers ausgestaltet ist, wenn sie dessen Zählerstand ausliest.

Die Teilnehmerstation ist zudem mit einer Auswerteeinrichtung zum Auswerten des von der Zählerstandleseeinrichtung ausgelesenen Zählerstands ausgestattet.

Die Teilnehmerstation weist eine Auswerteeinrichtung zum Ermitteln der Buslast eines Busses des Bussystems auf der Grundlage eines zeitlichen Abstands von Lesezugriffen der Zählerstandleseeinrichtung, dem Zählerstand des Zählers oder des weiteren Zählers, und einer zeitlichen Länge der Nachrichten auf dem Bus auf.

Mit der beschriebenen Teilnehmerstation kann aufgrund des Zählerstands des Zählers die Buslast, insbesondere die CAN-Buslast, ermittelt werden. Im Rahmen eines Netzwerkmanagements lassen sich damit Aussagen über den Zustand des Bussystems, insbesondere des CAN-Bussystems, und der daran angeschlossenen Bussystem-Controller, insbesondere der CAN-Controller, machen.

Vorteilhafte weitere Ausgestaltungen der Teilnehmerstation sind in den abhängigen Patentansprüchen angegeben.

Es ist auch möglich, dass die Auswerteeinrichtung zum Ermitteln der Teilnehmerstation derart ausgestaltet ist, festzustellen, ob Sendenachrichten der Teilnehmerstation durch Nachrichten höherer Priorität blockiert sind, die von einer weiteren Teilnehmerstation gesendet werden. Hiermit kann ermittelt werden, ob eine Umkonfiguration der an den CAN-Bus angeschlossenen Teilnehmerstation erforderlich ist, zum zu erreichen, dass alle Nachrichten ihren Empfänger erreichen.

Die Auswerteeinrichtung kann auch zum Ermitteln ausgestaltet sein, ob der Quotient aus Zählerstand des Zählers geteilt durch die Summe aus dem Zählerstand des Zählers und dem Zählerstand des weiteren Zählers kleiner als ein vorbestimmter Erwartungswert ist.

Vorteilhafter Weise gibt die Teilnehmerstation eine Fehlermeldung aus, wenn die Auswertung der Auswerteeinrichtung ergibt, dass die Summe der Zählerstände der Zähler in einer Teilnehmerstation ungleich der Summe der Zählerstände in einer weiteren Teilnehmerstation ist.

Bevorzugt hat die Teilnehmerstation zudem einen Fehlerprotokollierungszähler zum Zählen von erkannten Fehlern, wobei die Auswerteeinrichtung zum Ermitteln ausgestaltet ist, ob der Zählerstand des Fehlerprotokollierungszählers geringer als der Zählerstand des Zählers oder des weiteren Zählers ist.

Die zuvor genannte Aufgabe wird zudem durch ein Verfahren zur Übertragung von Daten zwischen Teilnehmerstationen eines Bussystems mit den Merkmalen des Anspruchs 7 gelöst.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Diagramm zur Veranschaulichung der Menge der Nachrichten N über der Zeit t bei dem Bussystem von Fig. 1;
Fig. 3 eine Ansicht zur Veranschaulichung der Funktionsweise eines Zählers gemäß dem ersten Ausführungsbeispiel;
Fig. 4 ein Flussdiagramm eines Verfahrens gemäß dem ersten Ausführungsbeispiel;
Fig. 5 ein vereinfachtes Blockschaltbild eines Bussystems gemäß einem zweiten Ausführungsbeispiel; und
Fig. 6 ein Blockschaltbild eines Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

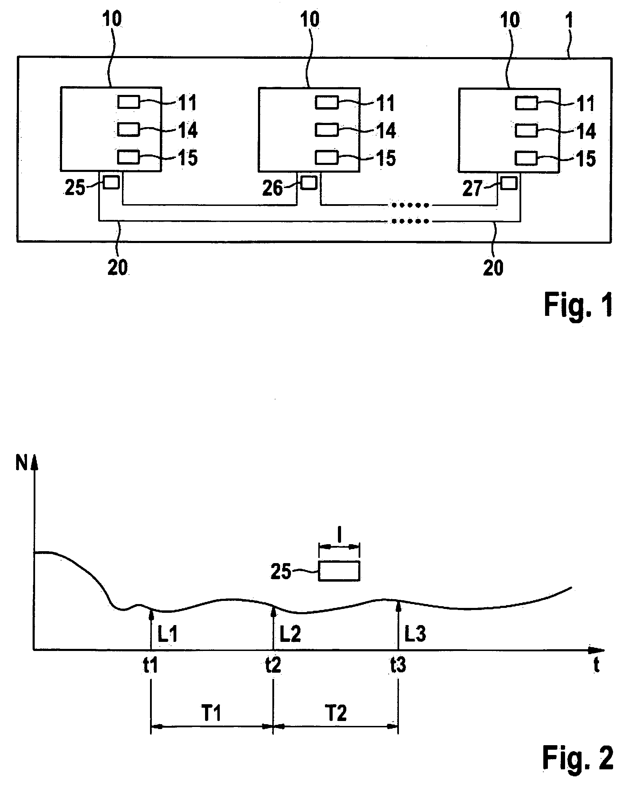

Fig. 1 zeigt ein Bussystem 1, das beispielsweise ein CAN-Bussystem sein kann, das in einem Fahrzeug, insbesondere einem Kraftfahrzeug, einem Flugzeug, usw., oder im Krankenhaus usw. Verwendung finden kann. Das Bussystem 1 hat eine Vielzahl von Teilnehmerstationen 10, die jeweils an einen Bus 20 angeschlossen sind. Über den Bus 20 können Nachrichten 25, 26, 27 zwischen den einzelnen Teilnehmerstationen 10 übertragen werden. Die Teilnehmerstationen 10 können beispielsweise Steuergeräte oder Anzeigevorrichtungen eines Kraftfahrzeugs sein.

In Fig. 1 hat jede der Teilnehmerstationen 10 einen Zähler 11, eine Zählerstandleseeinrichtung 14 und eine Auswerteeinrichtung 15. Der Zähler 11 dient zum Zählen von fehlerfrei versandten Nachrichten 25 und fehlerfrei empfangenen Nachrichten 25. Die Zählerstandleseeinrichtung 14 dient zum Lesen und dann zum Zurücksetzen des Zählerstands des Zählers 11 auf seinen Initialwert, beispielsweise Null. Die Zählerstandleseeinrichtung 14 hat demzufolge die Funktion einer Leseeinrichtung und einer Zurücksetzeinrichtung. Die Auswerteeinrichtung 15 dient zum Auswerten des von der Zählerstandleseeinrichtung 14 gelesenen Zählerstands des Zählers 11.

Fig. 2 zeigt ein Diagramm zur Veranschaulichung der Menge N der Nachrichten 25, 26, 27 über der Zeit t als Beispiel. Zudem ist in dem Diagramm von Fig. 2 eine Nachricht 25 zur Darstellung einer zeitlichen Länge I der Nachricht 25 auf dem Bus 20 wiedergegeben. Zu der Zeit t1 findet ein Lesezugriff L1 auf den Zähler 11 statt. Zu der Zeit t2 findet ein Lesezugriff L2 auf den Zähler 11 statt. Zu der Zeit t3 findet ein Lesezugriff L3 auf den Zähler 11 statt. Die Lesezugriffe L1, L2, L3 sind in Fig. 2 jeweils als ein Pfeil dargestellt. Die Zeitspanne T1 zwischen dem Zeitpunkt t1 und dem Zeitpunkt t2 und die Zeitspanne T2 zwischen dem Zeitpunkt t2 und t3 sind in Fig. 2 gleich. Die Auswerteeinrichtung 15 kann hiermit den zeitlichen Abstand der Lesezugriffe L1, L2, L3 auf den Zähler 11, welcher den Zeitspannen T1 oder T2 entspricht, als t2 - t1 bzw. t3 - t2 bestimmen. Die Zeitspannen T1 und T2 sind vorzugsweise gleich, wie in Fig. 2 gezeigt. Die Nachricht 25 wird in Fig. 2 nach dem Zeitpunkt t2 gesendet und ist schon vor dem Zeitpunkt t3 beendet. Die zeitliche Länge I der Nachricht 25 in Fig. 2 ist somit kürzer als die Zeitspanne T2.

Die zeitliche Länge I der Nachrichten 25 ist bevorzugt für alle Nachrichten 25 gleich. Zudem kann auch die zeitliche Länge I der Nachrichten 26 und/oder der Nachrichten 27 gleich der zeitlichen Länge I der Nachrichten 25 sein. Die zeitliche Länge I der Nachrichten 25, 26, 27 kann jedoch auch verschieden sein.

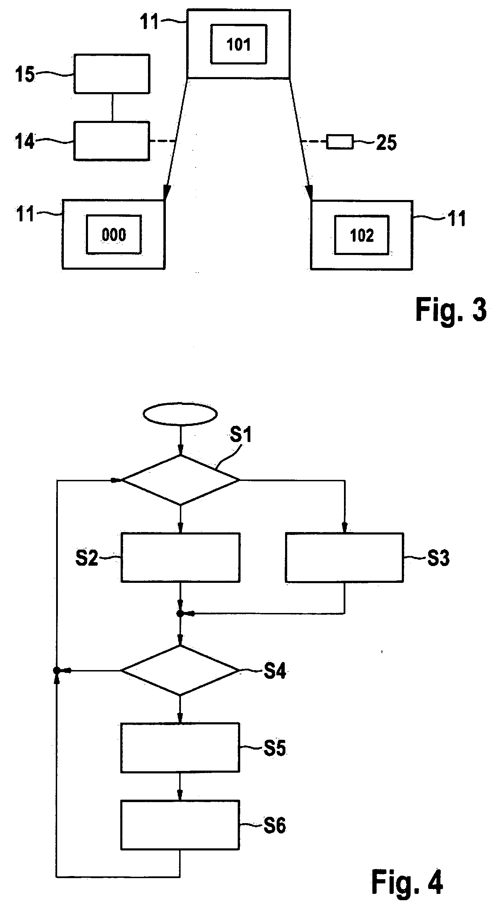

Fig. 3 zeigt das Inkrementieren und Dekrementieren des Zählers 11. Das heißt, wird von einer der Teilnehmerstationen 10 eine Nachricht 25 oder 26 oder 27 fehlerfrei versandt oder empfangen, wird der Zähler 11 dieser Teilnehmerstation 10 um eins erhöht, anders ausgedrückt inkrementiert. In Fig. 3 hat der Zähler 11 zunächst den Zählerstand 101 und geht nach fehlerfreiem bzw. korrektem Versand oder fehlerfreiem bzw. korrektem Empfang der Nachricht 25 auf den Zählerstand 102 über, wie im rechten Teil von Fig. 3 gezeigt. Wird der Zähler 11 mit dem Zählerstand 101 jedoch mit der Zählerstandleseeinrichtung 14 ausgelesen, so setzt die Zählerstandleseeinrichtung 14 den Zähler 11 auf den Zählerstand "000" zurück, wie im linken Teil von Fig. 3 gezeigt. Wird der Zählerstand des Zählers 11 von der Zählerstandleseeinrichtung 14 ausgelesen, kann die Auswerteeinrichtung 15 den von der Zählerstandleseeinrichtung 14 ausgelesenen Zählerstand des Zählers 11 auswerten.

Fig. 4 zeigt die bereits unter Bezugnahme auf Fig. 3 beschriebene Funktion des Zählers 11 in einem Flussdiagramm. Das Flussdiagramm gibt die Funktion bei einem Verfahren zur Übertragung von Daten zwischen den Teilnehmerstationen 10 des Bussystems 1 wieder. Nach dem Start des Verfahrens wird bei einem Schritt S1 geprüft, ob eine Nachricht 25 von einer Teilnehmerstation 10 korrekt gesendet oder empfangen wurde.

Lautet die Antwort bei dem Schritt S1 JA, geht der Fluss zu einem Schritt S2 weiter. Bei dem Schritt S2 wird der Zähler 11 um Eins inkrementiert.

Lautet die Antwort bei dem Schritt S1 hingegen NEIN, geht der Fluss zu einem Schritt S3 weiter. Bei dem Schritt S3 wird der Zählerstand des Zählers 11 nicht verändert.

Nach dem Schritt S2 und dem Schritt S3 geht der Fluss zu einem Schritt S4 weiter.

Bei dem Schritt S4 wird geprüft, ob der Zählerstand des Zählers 11 auszulesen ist oder nicht. Diese Prüfung hat vorzugsweise in regelmäßigen Abständen die Antwort JA. Das heißt, es kann geprüft werden, ob eine vorbestimmte Zeitdauer verstrichen ist oder nicht.

Lautet die Antwort bei dem Schritt S4 JA, geht der Fluss zu dem Schritt S5 weiter. Bei dem Schritt S5 wird der Zählerstand des Zählers 11 mit der Zählerstandleseeinrichtung 14 ausgelesen und zudem der Zähler 11 auf seinen Initialwert zurückgesetzt. Nach dem Schritt S5, der jeweils in regelmäßigen Abständen, den Zeitspannen T1, T2, ausgeführt wird, geht der Fluss zu dem Schritt S6 weiter.

Lautet die Antwort bei dem Schritt S4 hingegen NEIN, geht der Fluss direkt zu dem Schritt S1 zurück.

Bei dem Schritt S6 wertet die Auswerteeinrichtung 15 den ausgelesenen Zählerstand des Zählers 11 aus. Das heißt, die Auswerteeinrichtung 15 kann auf der Grundlage des Zählerstands des Zählers 11, welcher bei dem Schritt S5 ausgelesen wurde, aus dem zeitlichen Abstand T1, T2 der Lesezugriffe L1, L2, L3 auf den Zähler 11, und der zeitlichen Menge I der Nachrichten 25 auf dem Bus 20 die Last auf dem Bus 20 ermitteln. Nach dem Schritt S6, der wie der Schritt S5 in regelmäßigen Abständen ausgeführt wird, geht der Fluss zu dem Schritt S1 zurück.

Das Verfahren ist beendet, wenn die Spannungsversorgung des Bussystems 1 unterbrochen ist.

Die zuvor beschriebenen Funktionen können in einer Kommunikations-Software des Bussystems 1 implementiert sein.

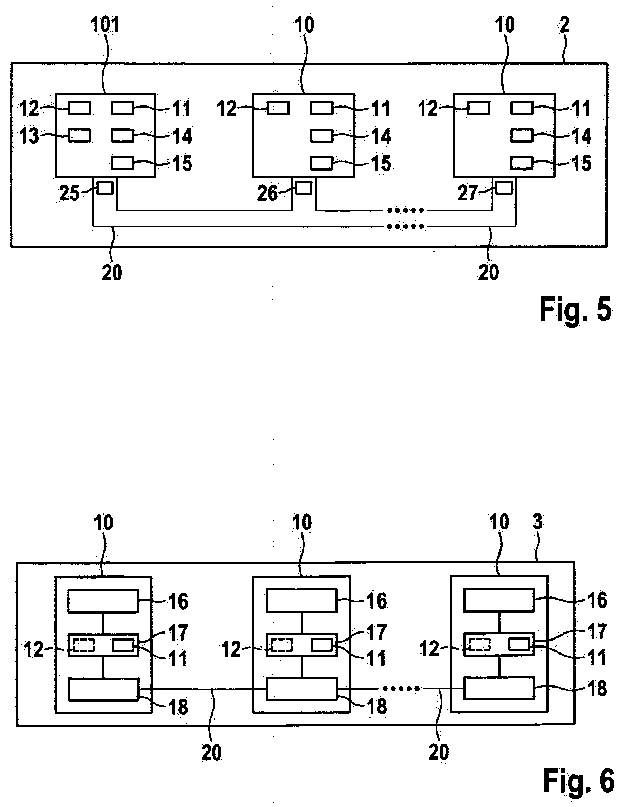

Fig. 5 zeigt ein Bussystem 2 gemäß einem zweiten Ausführungsbeispiel. Das Bussystem 2 des zweiten Ausführungsbeispiels ist in weiten Teilen auf die gleiche Weise ausgeführt wie das Bussystem 1 des ersten Ausführungsbeispiels. Daher werden im Weiteren nur die Unterschiede zwischen dem ersten und zweiten Ausführungsbeispiel beschrieben. Im Übrigen wird auf die Beschreibung des ersten Ausführungsbeispiels verwiesen.

Im Unterschied zum ersten Ausführungsbeispiel hat jede Teilnehmerstation 10, 101 des Bussystems 2 des zweiten Ausführungsbeispiels zusätzlich zu dem Zähler 11 einen weiteren Zähler 12. Zudem hat eine der Teilnehmerstationen, in Fig. 5 die Teilnehmerstation 101, zusätzlich einen Fehlerprotokollierungszähler 13.

Bei diesem Ausführungsbeispiel dient der Zähler 11 zum Zählen jeder von der Teilnehmerstation 10, 101 fehlerfrei versandten Nachricht 25 oder 26 oder 27. Das heißt, der Zähler 11 wird nur bei von der jeweiligen Teilnehmerstation 10, 101 fehlerfrei versandten Nachrichten 25 oder 26 oder 27 um eins inkrementiert. Demgegenüber wird der weitere Zähler 12 nach jeder von der jeweiligen Teilnehmerstation 10, 101 fehlerfrei empfangenen Nachricht 25 hochgezählt. Das heißt, der weitere Zähler 12 wird bei empfangenen Nachrichten 25 oder 26, oder 27 jeweils um eins inkrementiert. Der Zähler 11 und der weitere Zähler 12 werden durch ihr Auslesen mittels der Zählerstandleseeinrichtung 14 zurückgesetzt.

Bei einem fehlerfrei arbeitenden Bussystem 2 ist die Summe der beiden Zählerstände bei jeder Teilnehmerstafion 10 und der Teilnehmerstation 101 gleich. Der Quotient aus Zählerstand des Zählers 11 / (Zählerstand des Zählers 11 + Zählerstand des weiteren Zählers 12) kann dazu verwendet werden zu ermitteln, ob die Sendenachrichten der zugehörigen Teilnehmerstation 10, 101 durch Nachrichten 25 oder 26 oder 27 höherer Priorität blockiert werden, welche von anderen Teilnehmerstationen 101, 10 versandt wurden. Dies ist der Fall wenn der Quotient kleiner als ein vorbestimmter Erwartungswert ist. Diese Ermittlung kann durch eine der Auswerteeinrichtungen 15 des Bussystems 1 ausgeführt werden.

Ist die Summe der Zählerstände des Zählers 11 und des weiteren Zählers 12 bei jeder Teilnehmerstation 10, 101 nicht gleich, kann eine temporär oder permanent gestörte Teilnehmerstation 10, 101 ermittelt werden und per Fehlermeldung angezeigt werden. Diese Ermittlung kann durch eine der Auswerteeinrichtungen 15 des Bussystems 1 ausgeführt werden.

Der Fehlerprotokollierungszähler 13 in Fig. 5 wird inkrementiert, wenn ein Protokollfehler des Bussystems 1 einen nicht dargestellten Sendefehlerzähler oder einen Empfangsfehlerzähler inkrementiert. Der Zählerstand des Fehlerprotokollierungszählers 13 zeigt die Summe der seit dem letzten Lesen aufgetretenen Protokollfehler auf dem Bus 20 an.

Zusammen mit dem Fehlerprotokollierungszähler 13 kann das Verhältnis von erkannten Fehlern zu erfolgreich versandten beziehungsweise empfangenen Nachrichten 25 oder 26 oder 27 ermittelt werden. Ein hoher Zählerstand des Fehlerprotokollierungszählers 13 bei einem niedrigen Zählerstand des Zählers 11 oder des weiteren Zählers 12 ist ein Hinweis auf eine gestörte Teilnehmerstation 10, 101. Auch dies kann durch eine der Auswerteeinrichtungen 15 des Bussystems 1, bevorzugt jedoch durch die Auswerteeinrichtung 15 der Teilnehmerstation 101 ausgewertet werden.

Fig. 6 zeigt in einem Blockschaltbild ein Bussystem 3 gemäß einem dritten Ausführungsbeispiel. Bei diesem Ausführungsbeispiel hat jede Teilnehmerstation 10 einen Mikrocomputer 16, welcher mit einer Bussteuereinrichtung 17, insbesondere einem CAN-Controller 17, verbunden ist. Der CAN-Controller 17 kann mit einer Bus-Sende-/Empfangseinrichtung 18, insbesondere einer auch CAN-Transceiver genannten CAN-Sende-/Empfangseinrichtung 18, kommunizieren, die in den Bus 20 geschaltet ist. Bei diesem Ausführungsbeispiel ist der Zähler 11 Teil der Bussteuereinrichtung 17. Ist der Zähler 11 zum Zählen der von der Teilnehmerstation 10, genauer gesagt der Sende-/Empfangseinrichtung 18, fehlerfrei gesendeten und empfangenen Nachrichten 25 ausgestaltet, ist kein weiterer Zähler 12 vorhanden, wie bei dem ersten Ausführungsbeispiel. Ist jedoch, wie bei dem zweiten Ausführungsbeispiel, auch der weitere Zähler 12 vorhanden, sind der Zähler 11 und der weitere Zähler 12 konfiguriert, wie bei dem zweiten Ausführungsbeispiel beschrieben.

Alle zuvor beschriebenen Ausgestaltungen der Teilnehmerstationen 10, 101 und des Verfahrens können einzeln oder in allen möglichen Kombinationen Verwendung finden. Zusätzlich sind insbesondere folgende Modifikationen denkbar.

Das zuvor beschriebene Bussystem 1, 2, 3 gemäß dem ersten bis dritten Ausführungsbeispiel ist anhand eines auf dem CAN-Protokoll basierenden Bussystems beschrieben. Das Bussystem 1, 2, 3 kann jedoch auch eine andere Art von Kommunikationsnetz sein. Es ist vorteilhaft, jedoch nicht zwangsläufige Voraussetzung, dass bei dem Bussystem 1, 2, 3 zumindest für bestimmte Zeitspannen ein exklusiver, kollisionsfreier Zugriff einer Teilnehmerstation 10 auf einen gemeinsamen Kanal gewährleistet ist.

Das Bussystem 1, 2, 3 gemäß dem ersten bis dritten Ausführungsbeispiel ist insbesondere ein CAN-Netzwerk oder ein TTCAN-Netzwerk oder ein CAN FD-Netzwerk.

Die Anzahl der Teilnehmerstationen 10 in den Bussystemen 1, 2, 3 des ersten bis dritten Ausführungsbeispiels ist beliebig.

Der Zählerstand des Zählers 11 kann auch von einer separaten Zurücksetzeinrichtung auf seinen Initialwert, beispielsweise Null, zurückgesetzt werden, ohne dass der Zählerstand des Zählers 11 ausgelesen wird.

Vorzugsweise sind auch die Zählerstandleseeinrichtung 14 und die Auswerteeinrichtung 15 Teil der Bussteuereinrichtung 17. Darüber hinaus kann auch der Fehlerprotokollierungszähler 13 Teil der Bussteuereinrichtung 17 sein.

### Bezugszeichenliste:

- 1: Bussystem
- 2: Bussystem
- 3: Bussystem
- 10: Teilnehmerstation
- 101: Teilnehmerstation
- 11: Zähler
- 12: weiterer Zähler
- 13: Fehlerprotokollierungszähler
- 14: Zählerstandleseeinrichtung
- 15: Auswerteeinrichtung
- 16: Mikrocomputer
- 17: CAN-Controller
- 18: Bus-Sende-/Empfangseinrichtung
- 20: Bus
- 25: Nachricht
- 26: Nachricht
- 27: Nachricht

### Erklärung der Schritte des Flussdiagramms:

- S1: Nachricht korrekt gesendet oder empfangen
- S2: inkrementiere Zähler 11 um 1
- S3: Zählerstand des Zählers 11 bleibt unverändert
- S4: Zählerstand auslesen
- S5: Zählerstand des Zählers 11 auslesen und zurücksetzen
- S6: Buslast-Auswertung

## Patentansprüche

1. Teilnehmerstation (10; 101) eines Bussystems (1; 2; 3), mit einem Zähler (11) zum Zählen jeder fehlerfrei versandten Nachricht (25, 26, 27), wobei der Zähler (11) inkrementiert wird, wenn eine Nachricht (25, 26, 27) fehlerfrei versandt wird,
einem weiteren Zähler (12) zum Zählen jeder fehlerfrei empfangenen Nachricht (25, 26, 27), wobei der weitere Zähler (12) inkrementiert wird, wenn eine Nachricht (25, 26, 27) fehlerfrei empfangen wird,
**gekennzeichnet durch**
eine Zählerstandleseeinrichtung (14) zum Auslesen des Zählerstands des Zählers (11) oder des weiteren Zählers (12), wobei die Zählerstandleseeinrichtung (14) zum Zurücksetzen eines Zählerstands des Zählers (11) oder des weiteren Zählers (12) ausgestaltet ist, wenn sie dessen Zählerstand ausliest, und
eine Auswerteeinrichtung (15) zum Auswerten des von der Zählerstandleseeinrichtung (14) ausgelesenen Zählerstands, wobei die Auswerteeinrichtung (15) zum Ermitteln einer Buslast eines Busses (20) des Bussystems (1; 2; 3) auf der Grundlage eines zeitlichen Abstands von Lesezugriffen (L1, L2, L3) der Zählerstandleseeinrichtung (14), dem Zählerstand des Zählers (11) oder des weiteren Zählers (12), und einer zeitlichen Länge (I) der Nachrichten (25, 26, 27) auf dem Bus (20) ausgestaltet ist.

2. Teilnehmerstation (101) nach Anspruch 1, zudem mit einer Zurücksetzeinrichtung (14), wobei die Zurücksetzeinrichtung (14) zum Zurücksetzen des Zählers (11) und/oder des weiteren Zählers (12) ausgestaltet ist, wenn der Zählerstand des jeweiligen Zählers (11, 12) gelesen wird.

3. Teilnehmerstation (101) nach Anspruch 1 oder 2, wobei die Auswerteeinrichtung (15) zum Ermitteln ausgestaltet ist, ob gesendete Nachrichten (25) der Teilnehmerstation (101) durch Nachrichten (26, 27) höherer Priorität blockiert sind, die von einer weiteren Teilnehmerstation (10) gesendet werden.

4. Teilnehmerstation (10; 101) nach einem der Ansprüche 1 bis 3, wobei die Auswerteeinrichtung (15) zum Ermitteln ausgestaltet ist, ob der Quotient aus Zählerstand des Zählers (11) geteilt durch die Summe aus dem Zählerstand des Zählers (11) und dem Zählerstand des weiteren Zählers (12) kleiner als ein vorbestimmter Erwartungswert ist.

5. Teilnehmerstation (10; 101) nach einem der Ansprüche 1 bis 4, wobei die Teilnehmerstation (10; 101) eine Fehlermeldung ausgibt, wenn die Auswertung der Auswerteeinrichtung (15) ergibt, dass die Summe der Zählerstände des Zählers (11) und des weiteren Zählers (12) in der Teilnehmerstation (10; 101) ungleich der Summe der Zählerstände des Zählers (11) und des weiteren Zählers (12) in einer weiteren Teilnehmerstation (10) ist.

6. Teilnehmerstation (10; 101) nach einem der Ansprüche 1 bis 5, zudem mit einem Fehlerprotokollierungszählers (13) zum Zählen von erkannten Fehlern, wobei die Auswerteeinrichtung (15) zum Ermitteln ausgestaltet ist, ob der Zählerstand des Fehlerprotokollierungszählers (13) geringer als der Zählerstand des Zählers (11) oder des weiteren Zählers (12) ist.

7. Verfahren zur Übertragung von Daten zwischen Teilnehmerstationen (10) eines Bussystems (1; 2; 3), mit den Schritten Zählen mit einem Zähler (11) jeder fehlerfrei versandten Nachricht (25, 26, 27), wobei der Zähler (11) inkrementiert wird, wenn eine Nachricht (25, 26, 27) fehlerfrei versandt wird,
Zählen mit einem weiteren Zähler (12) jeder fehlerfrei empfangenen Nachricht (25, 26, 27), wobei der weitere Zähler (12) inkrementiert wird, wenn eine Nachricht (25, 26, 27) fehlerfrei empfangen wird, **gekennzeichnet durch** die Schritte:
Auslesen des Zählerstands des Zählers (11) und Zurücksetzen des Zählerstands des Zählers (11), wenn der Zählerstand des Zählers (11) gelesen wurde,
Auslesen des Zählerstands des weiteren Zählers (12) und Zurücksetzen des Zählerstands des weiteren Zählers (12), wenn der Zählerstand des weiteren Zählers (12) gelesen wurde, und
Auswerten des ausgelesenen Zählerstands des Zählers (11) oder des weiteren Zählers (12) zum Ermitteln einer Buslast eines Busses (20) des Bussystems (1; 2; 3) auf der Grundlage eines zeitlichen Abstands von Lesezugriffen (L1, L2, L3), des ausgelesenen Zählerstands des Zählers (11) oder des weiteren Zählers (12), und einer zeitlichen Länge (I) der Nachrichten.

## Claims

1. Subscriber station (10; 101) in a bus system (1; 2; 3), having a counter (11) for counting every correctly sent message (25, 26, 27), wherein the counter (11) is incremented when a message (25, 26, 27) is sent correctly,
a further counter (12) for counting every correctly received message (25, 26, 27), wherein the further counter (12) is incremented when a message (25, 26, 27) is received correctly,
**characterized by**
a count reading device (14) for reading the count on the counter (11) or on the further counter (12), wherein the count reading device (14) is designed to reset a count on the counter (11) or on the further counter (12) when it reads the count thereof, and
an evaluation device (15) for evaluating the count that is read by the count reading device (14), wherein the evaluation device (15) is designed to ascertain a bus load for a bus (20) in the bus system (1; 2; 3) on the basis of an interval of time between read access operations (L1, L2, L3) by the count reading device (14), the count on the counter (11) or on the further counter (12) and a duration (I) of the messages (25, 26, 27) on the bus (20).

2. Subscriber station (101) according to Claim 1, additionally having a reset device (14), wherein the reset device (14) is designed to reset the counter (11) and/or the further counter (12) when the count on the respective counter (11, 12) is read.

3. Subscriber station (101) according to Claim 1 or 2, wherein the evaluation device (15) is designed to ascertain whether sent messages (25) from the subscriber station (101) are blocked by messages (26, 27) with higher priority that are sent by a further subscriber station (10).

4. Subscriber station (10; 101) according to one of Claims 1 to 3, wherein the evaluation device (15) is designed to ascertain whether the quotient of the count on the counter (11) divided by the sum of the count on the counter (11) and the count on the further counter (12) is less than a predetermined expected value.

5. Subscriber station (10; 101) according to one of Claims 1 to 4, wherein the subscriber station (10; 101) outputs an error message if the result of the evaluation by the evaluation device (15) is that the sum of the counts on the counter (11) and on the further counter (12) in the subscriber station (10; 101) is not equal to the sum of the counts on the counter (11) and on the further counter (12) in a further subscriber station (10).

6. Subscriber station (10; 101) according to one of Claims 1 to 5, additionally having an error logging counter (13) for counting recognized errors, wherein the evaluation device (15) is designed to ascertain whether the count on the error logging counter (13) is lower than the count on the counter (11) or on the further counter (12).

7. Method for transmitting data between subscriber stations (10) in a bus system (1; 2; 3), having the steps of
using a counter (11) to count every correctly sent message (25, 26, 27), wherein the counter (11) is incremented when a message (25, 26, 27) is sent correctly,
using a further counter (12) to count every correctly received message (25, 26, 27), wherein the further counter (12) is incremented when a message (25, 26, 27) is received correctly, **characterized by** the steps of:
reading of the count on the counter (11) and resetting of the count on the counter (11) when the count on the counter (11) has been read,
reading of the count on the further counter (12) and resetting of the count on the further counter (12) when the count on the further counter (12) has been read, and
evaluation of the read count on the counter (11) or on the further counter (12) in order to ascertain a bus load for a bus (20) in the bus system (1; 2; 3) on the basis of an interval of time between read access operations (L1, L2, L3), the read count on the counter (11) or on the further counter (12) and a duration (I) of the messages.

## Revendications

1. Station d'abonné (10 ; 101) d'un système de bus (1; 2; 3), comportant un compteur (11) destiné à compter chaque message (25, 26, 27) émis sans erreur, dans lequel le compteur (11) est incrémenté lorsqu'un message (25, 26, 27) est émis sans erreur,
un autre compteur (12) destiné à compter chaque message (25, 26, 27) reçu sans erreur, dans lequel l'autre compteur (12) est incrémenté lorsqu'un message (25, 26, 27) est reçu sans erreur,
**caractérisé par** un dispositif de lecture d'état de comptage (14) destiné à lire l'état de comptage du compteur (11) ou de l'autre compteur (12), dans lequel le dispositif de lecture d'état de comptage (14) est conçu pour réinitialiser un état de comptage du compteur (11) ou de l'autre compteur (12) lorsqu'il lit son état de comptage, et
un dispositif d'évaluation (15) destiné à évaluer l'état de comptage lu par le dispositif de lecture d'état de comptage (14), dans lequel le dispositif d'évaluation (15) est conçu pour déterminer une charge de bus d'un bus (20) du système de bus (1 ; 2 ; 3) sur la base d'un intervalle de temps d'accès en lecture (L1, L2, L3) du dispositif de lecture d'état de comptage (14), de l'état de comptage du compteur (11) ou de l'autre compteur (12) et d'une longueur temporelle (1) des messages (25, 26, 27) sur le bus (20).

2. Station d'abonné (101) selon la revendication 1, comportant en outre un dispositif de réinitialisation (14), dans laquelle le dispositif de réinitialisation (14) est conçu pour réinitialiser le compteur (11) et/ou l'autre compteur (12) lorsque l'état de comptage du compteur respectif (11, 12) est lu.

3. Station d'abonné (101) selon la revendication 1 ou 2, dans laquelle le dispositif d'évaluation (15) est destiné à déterminer si des messages émis (25) de la station d'abonné (101) sont bloqués par des messages (26, 27) de priorité supérieure qui sont émis par une autre station d'abonné (10).

4. Station d'abonné (10 ; 101) selon l'une quelconque des revendications 1 à 3, dans laquelle le dispositif d'évaluation (15) est conçu pour déterminer si le quotient obtenu en divisant l'état de comptage du compteur (11) par la somme de l'état de comptage du compteur (11) et de l'état de comptage de l'autre compteur (12) est inférieur à une valeur attendue prédéterminée.

5. Station d'abonné (10 ; 101) selon l'une quelconque des revendications 1 à 4, dans laquelle la station d'abonné (10 ; 101) fournit en sortie un message d'erreur lorsque l'évaluation effectuée par le dispositif d'évaluation (15) indique que la somme des états de comptage du compteur (11) et de l'autre compteur (12) de la station d'abonné (10 ; 101) est différente de la somme des états de comptage du compteur (11) et de l'autre compteur (12) d'une autre station d'abonné (10).

6. Station d'abonné (10 ; 101) selon l'une quelconque des revendications 1 à 5, comportant en outre un compteur de journalisation des erreurs (13) destiné à compter des erreurs reconnues, dans laquelle le dispositif d'évaluation (15) est conçu pour déterminer si l'état de comptage du compteur de journalisation des erreurs (13) est inférieur à l'état de comptage du compteur (11) ou de l'autre compteur (12) .

7. Procédé de transmission de données entre des stations d'abonné (10) d'un système de bus (1 ; 2 ; 3), comportant les étapes consistant à
compter, à l'aide d'un compteur (11), chaque message (25, 26, 27) émis sans erreur, dans lequel le compteur (11) est incrémenté lorsqu'un message (25, 26, 27) est émis sans erreur,
compter, à l'aide d'un autre compteur (12), chaque message (25, 26, 27) reçu sans erreur, dans lequel l'autre compteur (12) est incrémenté lorsqu'un message (25, 26, 27) est reçu sans erreur,
**caractérisé par** les étapes consistant à :
lire l'état de comptage du compteur (11) et réinitialiser l'état de comptage du compteur (11) lorsque l'état de comptage du compteur (11) a été lu,
lire l'état de comptage de l'autre compteur (12) et réinitialiser l'état de comptage de l'autre compteur (12) lorsque l'état de comptage de l'autre compteur (12) a été lu, et
évaluer l'état de comptage lu du compteur (11) ou de l'autre compteur (12) pour déterminer une charge de bus d'un bus (20) du système de bus (1 ; 2 ; 3) sur la base d'un intervalle de temps d'accès en lecture (L1, L2, L3), de l'état de comptage lu du compteur (11) ou de l'autre compteur (12) et d'une longueur temporelle (1) des messages.
